# EUROPEAN PATENT APPLICATION

(11) **EP 2 388 235 A1**
(43) Date of publication of application: **23.11.2011**
(21) Application number: 10731314.0
(22) Date of filing: 12.01.2010
(51) Int. Cl.: C01B 31/02, C08G 14/00, H01G 9/058, H01M 4/587

(54) **METHOD FOR PRODUCING CARBON MATERIAL**

(30) Priority: 16.01.2009 JP 2009007460
(71) Applicant: Sumitomo Chemical Company, Limited, Tokyo 104-8260 (JP)
(72) Inventor: SUZUKI, Junji, Toyonaka-shi Osaka 561-0802 (JP); MURAKAMI, Chikara, Funabashi-shi Chiba 274-0063 (JP); ARISE, Ichiro, Ikeda-shi Osaka 563-0025 (JP); KURAKANE, Kosuke, Ibaraki-shi Osaka (JP)
(74) Representative: Hart-Davis, Jason
(86) International application number: PCT/JP2010/050459
(87) International publication number: WO 2010/082645

(57) **Abstract**

A process for producing a carbon material comprising
(A) a step of polymerizing a compound represented by the formula (1) 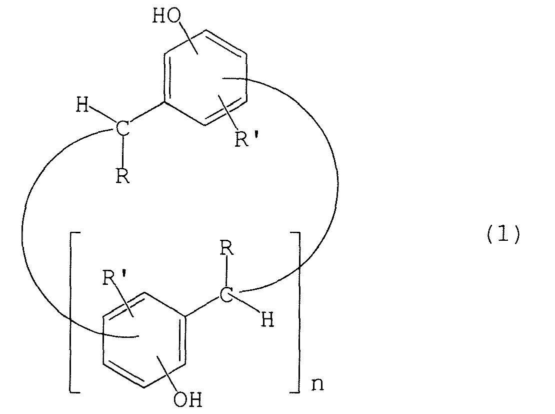 wherein R is independently in each occurrence a hydrogen atom etc., R' is independently in each occurrence a hydrogen atom etc., and n represents an integer of 3 to 7, a compound having 1 to 30 carbon atoms and having at least one divalent group represented by the formula (2a) 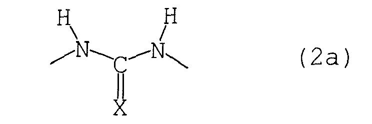 wherein X represents an oxygen atom or a sulfur atom, or at least two divalent groups represented by the formula (2b) 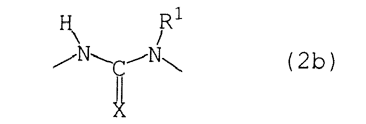 wherein R¹ represents an alkyl group having 1 to 12 carbon atoms etc. , and X represents an oxygen atom or a sulfur atom, and an aldehyde compound to obtain a polymer, and
(B) a step of heating the polymer obtained in the above-mentioned step (A) at 600°C to 3000°C under an inert gas atmosphere.

## Description

### Field of the Invention

The present invention relates to a process for producing a carbon material.

### Background of the Invention

A carbon material such as a carbon powder is used for materials for electrodes such as lithium ion secondary cells. JP 10-188978 A discloses a process for producing a carbon material comprising curing a polymer obtained by reacting o-cresol with formaldehyde with a use of hexamethylenetetramine to obtain a cured resin followed by heating the cured resin obtained at 1000°C under an inert gas atmosphere. Further, JP 10-188978 A also discloses the lithium ion secondary cell comprising the obtained carbon materials has 341 mAh/g of an initial charge and discharge capacity.

### Disclosure of the Invention

The present invention provides the followings:
[1] A process for producing a carbon material comprising
   (A) a step of polymerizing a compound represented by the formula (1) 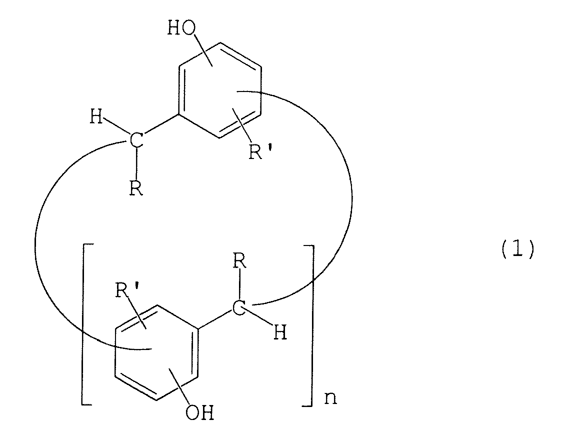 wherein R is independently in each occurrence a hydrogen atom or a hydrocarbon group having 1 to 12 carbon atoms, and the hydrocarbon group may have one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group, R' is independently in each occurrence a hydrogen atom or a methyl group, and n represents an integer of 3 to 7, a compound having 1 to 30 carbon atoms and having at least one divalent group represented by the formula (2a) 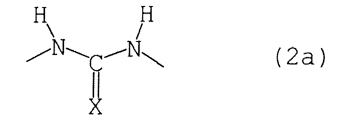 wherein X represents an oxygen atom or a sulfur atom, or at least two divalent groups represented by the formula (2b) 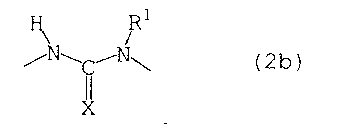 wherein R¹ represents an alkyl group having 1 to 12 carbon atoms or an aryl group having 6 to 12 carbon atoms, and X represents an oxygen atom or a sulfur atom, and an aldehyde compound to obtain a polymer, and
   (B) a step of heating the polymer obtained in the above-mentioned step (A) at 600°C to 3000°C under an inert gas atmosphere;
<2> A process for producing a carbon material comprising
   (A) a step of reacting a compound represented by the formula (1) 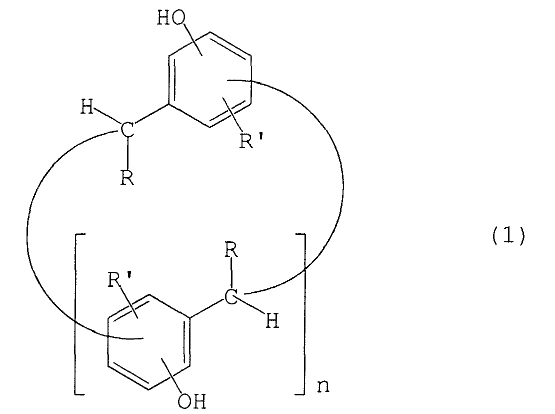 wherein R is independently in each occurrence a hydrogen atom or a hydrocarbon group having 1 to 12 carbon atoms, and the hydrocarbon group may have one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group, R' is independently in each occurrence a hydrogen atom or a methyl group, and n represents an integer of 3 to 7, a compound having 1 to 30 carbon atoms and having at least one divalent group represented by the formula (2a) 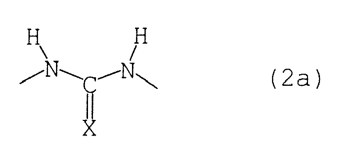 wherein X represents an oxygen atom or a sulfur atom, or at least two divalent groups represented by the formula (2b) 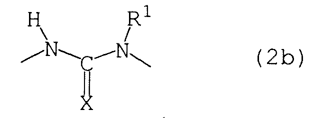 wherein R¹ represents an alkyl group having 1 to 12 carbon atoms or an aryl group having 6 to 12 carbon atoms, and X represents an oxygen atom or a sulfur atom, and an aldehyde compound to obtain a polymer,
   (C) a step of heating the polymer obtained in the above-mentioned step (A) at 400°C or less under an oxidizing gas atmosphere to obtain a calcined product, and
   (D) a step of heating the calcined product obtained in the above-mentioned step at 600°C to 3000°C under an inert gas atmosphere;
<3> The process according to <1> or <2>, wherein the polymerization reaction is conducted in the presence of a basic catalyst in the step (A);
<4> The process according to any one of <1> to <3>, wherein the step (A) further comprises a step of drying the polymer obtained;
<5> The process according to any one of <1> to <4>, wherein the step (A) further comprises a step of washing the polymer obtained;
<6> The process according to any one of <1> to <4>, wherein the step (A) further comprises a step of washing the polymer obtained followed by drying;
<7> The process according to any one of <1> to <6>, wherein R' is a hydrogen atom in the formula (1);
<8> The process according to any one of <1> or <6>, wherein R is a linear alkyl group having 1 to 12 carbon atoms in the formula (1);
<9> The process according to any one of <1> to <8>, wherein the aldehyde compound is formaldehyde;
<10> An electrode comprising a carbon material obtained by the process according to any one of <1> to <9>;
<11> A lithium ion secondary cell comprising the electrode according to <10>;
<12> A lithium ion capacitor comprising the electrode according to <10>;
<13> A carbon material obtainable by heating a polymer obtainable by reacting a compound represented by the formula (1) 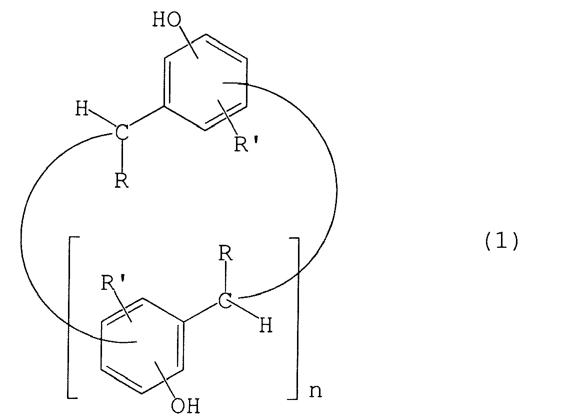 wherein R is independently in each occurrence a hydrogen atom or a hydrocarbon group having 1 to 12 carbon atoms, and the hydrocarbon group may have one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group, R' is independently in each occurrence a hydrogen atom or a methyl group, and n represents an integer of 3 to 7, a compound having 1 to 30 carbon atoms and having at least one divalent group represented by the formula (2a) 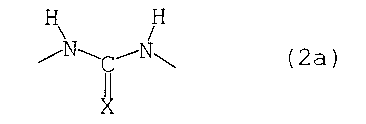 wherein X represents an oxygen atom or a sulfur atom, or at least two divalent groups represented by the formula (2b) 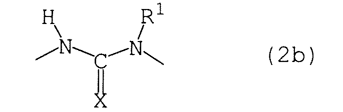 wherein R¹ represents an alkyl group having 1 to 12 carbon atoms or an aryl group having 6 to 12 carbon atoms, and X represents an oxygen atom or a sulfur atom,
   and an aldehyde compound, at 600°C to 3000°C under an inert gas atmosphere;
<14> A carbon material obtainable by heating a polymer obtaineable by reacting a compound represented by the formula (1) 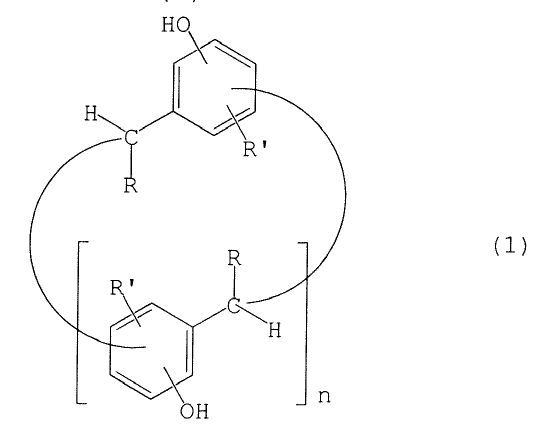 wherein R is independently in each occurrence a hydrogen atom or a hydrocarbon group having 1 to 12 carbon atoms, and the hydrocarbon group may have one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group, R' is independently in each occurrence a hydrogen atom or a methyl group, and n represents an integer of 3 to 7, a compound having 1 to 30 carbon atoms and having at least one divalent group represented by the formula (2a) 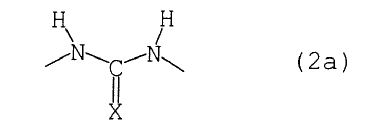 wherein X represents an oxygen atom or a sulfur atom, or at least two divalent groups represented by the formula (2b) 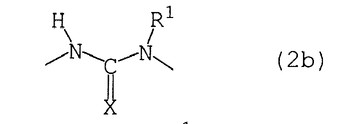 wherein R¹ represents an alkyl group having 1 to 12 carbon atoms or an aryl group having 6 to 12 carbon atoms, and X represents an oxygen atom or a sulfur atom, and an aldehyde compound at 400°C or less under an oxidizing gas atmosphere followed by heating the calcined product obtained at 600°C to 3000°C under an inert gas atmosphere;
<15> The carbon material according to <13> or <14>, wherein a ratio of number of atoms of hydrogen atoms to number of atoms of carbon atoms (H/C) is 0.08 to 0.25;
<16> The carbon material according to any one of <13> to <15>, wherein a content of nitrogen is 0.5% by weight or more.

### Best Modes for Carrying Out the Invention

First, a compound represented by the formula (1) 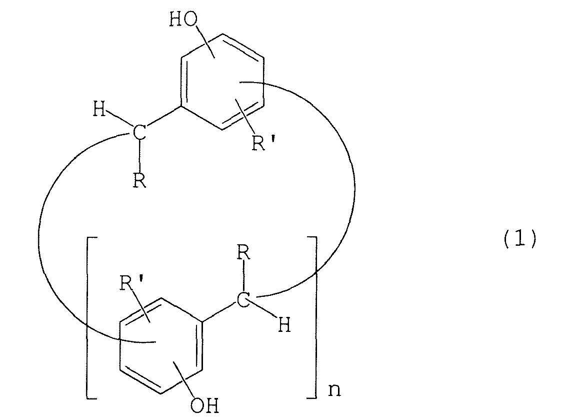 (hereinafter, simply referred to as the compound (1)) will be illustrated.

In the formula of the compound (1) used in the step (A), R is independently in each occurrence a hydrogen atom or a hydrocarbon group having 1 to 12 carbon atoms, and the hydrocarbon group may have one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group.

Examples of the hydrocarbon group having 1 to 12 carbon atoms include a linear alkyl group having 1 to 12 carbon atoms such as a methyl group, an ethyl group, a propyl group, a butyl group, a pentyl group, a hexyl group and an octyl group; a branched chain alkyl group having 3 to 12 carbon atoms such as an isopropyl group, a tert-butyl group, an isopentyl group, a tert-pentyl group and a 2-ethylhexyl group; a cycloalkyl group having 3 to 12 carbon atoms such as a cyclopentyl group and a cyclohexyl group; an aryl group having 6 to 12 carbon atoms such as a phenyl group, a naphthyl group, a 2-methylphenyl group, a 3-methylphenyl group and a 4-methylphenyl group; and an aralkyl group having 7 to 12 carbon atoms such as a benzyl group and a 2-phenylethyl group. A linear alkyl group having 1 to 12 carbon atoms is preferable, and a linear alkyl group having 2 to 6 carbon atoms is more preferable.

Examples of the alkoxy group having 1 to 6 carbon atoms include a methoxy group, an ethoxy group, a propoxy group, an isopropoxy group, a butoxy group and a tert-butoxy group.

Examples of the aryloxy group having 6 to 20 carbon atoms include a phenoxy group, a 2-methylphenoxy group, a 3-methylphenoxy group, a 4-methylphenoxy group and a naphthoxy group.

Examples of the halogen atom include a fluorine atom, a chlorine atom, a bromine atom and an iodine atom.

Examples of the alkylthio group having 1 to 6 carbon atoms include a methylthio group, an ethylthio group, a propylthio group, an isopropylthio group, a butylthio group, an isobutylthio group, a tert-butylthio group, a pentylthio group and a hexylthio group.

Examples of the arylsulfonyl group having 6 to 20 carbon atoms include a phenylsulfonyl group and a p-tolylsulfonyl group, and examples of the alkylsulfonyl group having 1 to 6 carbon atoms include a methylsulfonyl group and an ethylsulfonyl group.

Examples of the acylamino group having 2 to 20 carbon atoms include an acetylamino group, a propionylamino group and a benzoylamino group.

Examples of the hydrocarbon group having 1 to 12 carbon atoms and having one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group include a 2-hydroxyphenyl group, a 3-hydroxyphenyl group, a 4-hydroxyphenyl group, a 2-hydroxybenzyl group, a 3-hydroxybenzyl group, a 4-hydroxybenzyl group, a 2-methoxyphenyl group, a 3-methoxyphenyl group, a 4-methoxyphenyl group, a 2-chlorophenyl group, a 3-chlorophenyl group, a 4-chlorophenyl group, a 2-bromophenyl group, a 3-bromphenyl group, a 4-bromophenyl group, a 2-fluorophenyl group, a 3-fluorophenyl group, a 4-fluorophenyl group, a 2-methylthiophenyl, a 3-methylthiophenyl group, a 4-methylthiophenyl group, a 2-carboxyphenyl group, a 3-carboxyphenyl group, a 4-carboxyphenyl group, a 3-nitrophenyl group, a 4-aminophenyl group, a 4-cyanophenyl group and a 4-acetylaminophenyl group.

R is preferably a linear alkyl group having 1 to 12 carbon atoms, and more preferably a linear alkyl group having 2 to 6 carbon atoms.

In the formula (1), R' is independently in each occurrence a hydrogen atom or a methyl group, and is preferably a hydrogen atom from the viewpoint of easy production of the compound (1).

In the formula (1), n represents an integer of 3 to 7, and is preferably 3, 5 or 7, and is more preferably 3 or 7 and is especially preferably 3.

Two hydroxyl groups bonding to a benzene ring of the compound (1) are usually bonded to an ortho-position of -CH(R)- and a para-position of -CH(R)-.

Examples of the compound (1) include the compounds represented by the following formulae (I) to (III) 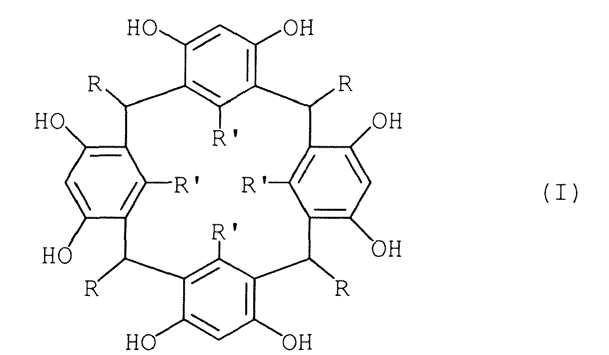 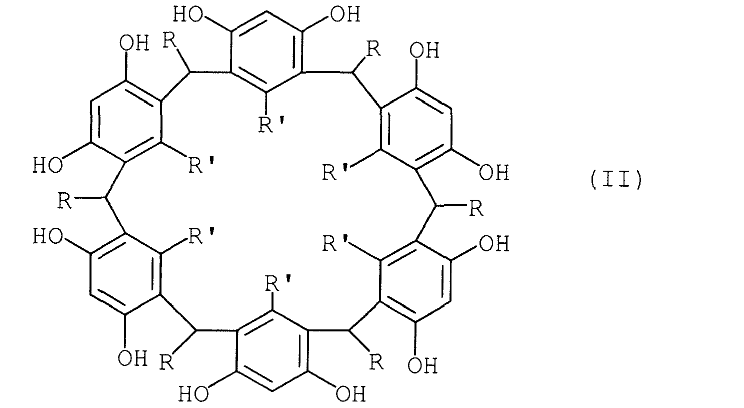 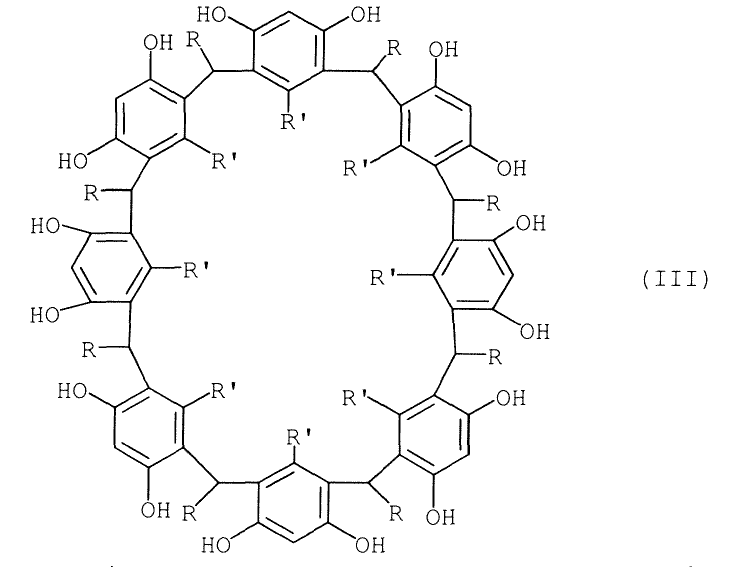 wherein R and R' represent the same meaning as defined above.

Specific examples of the compound (1) include the compound represented by the formula (I) wherein R and R' are hydrogen atoms,
the compound represented by the formula (I) wherein R is a hydrogen atom and R' is a methyl group,
the compound represented by the formula (I) wherein R is a methyl group and R' is a hydrogen atom,
the compound represented by the formula (I) wherein R is an ethyl group and R' is a hydrogen atom,
the compound represented by the formula (I) wherein R is a propyl group and R' is a hydrogen atom,
the compound represented by the formula (I) wherein R and R' are methyl groups,
the compound represented by the formula (I) wherein R is a hydrogen atom and R' is a phenyl group,
the compound represented by the formula (I) wherein R is a phenyl group and R' is a hydrogen atom,
the compound represented by the formula (I) wherein R is a phenyl group and R' is a methyl group,
the compound represented by the formula (II) wherein R and R' are hydrogen atoms,
the compound represented by the formula (II) wherein R is a hydrogen atom and R' is a methyl group,
the compound represented by the formula (II) wherein R is a methyl group and R' is a hydrogen atom,
the compound represented by the formula (II) wherein R is an ethyl group and R' is a hydrogen atom,
the compound represented by the formula (II) wherein R is a propyl group and R' is a hydrogen atom,
the compound represented by the formula (II) wherein R and R' are methyl groups,
the compound represented by the formula (II) wherein R is a hydrogen atom and R' is a phenyl group,
the compound represented by the formula (II) wherein R is a phenyl group and R' is a hydrogen atom,
the compound represented by the formula (II) wherein R is a phenyl group and R' is a methyl group,
the compound represented by the formula (III) wherein R and R' are hydrogen atoms,
the compound represented by the formula (III) wherein R is a hydrogen atom and R' is a methyl group,
the compound represented by the formula (III) wherein R is a methyl group and R' is a hydrogen atom,
the compound represented by the formula (III) wherein R is an ethyl group and R' is a hydrogen atom,
the compound represented by the formula (III) wherein R is a propyl group and R' is a hydrogen atom,
the compound represented by the formula (III) wherein R and R' are methyl groups,
the compound represented by the formula (III) wherein R is a hydrogen atom and R' is a phenyl group,
the compound represented by the formula (III) wherein R is a phenyl group and R' is a hydrogen atom, and
the compound represented by the formula (III) wherein R is a phenyl group and R' is a methyl group.

As the compound (1), a commercially available one may be used, and one produced according to the method comprising reacting a compound represented by the formula (3) 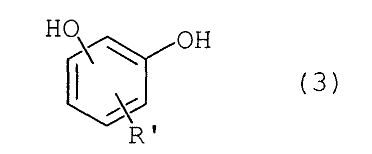 wherein R' is the same as defined above (hereinafter, simply referred to as the compound (3)), with a compound represented by the formula (4)

R-CHO (4)

wherein R is the same as defined above (hereinafter, simply referred to as the compound (4)), in the presence of an acid catalyst (e.g. Tetrahedron, 52, 2663-2704 (1996)).

Examples of the compound (3) include resorcinol, 2-methylresorcinol and 5-methylresorcinol, and resorcinol is preferable. As the compound (3), a commercially available one is usually used.

Examples of the compound (4) include an aliphatic aldehyde such as formaldehyde, paraformaldehyde, trioxane, acetaldehyde, propionaldehyde, butyraldehyde, isobutyraldehyde, hexylaldehyde, dodecylaldehyde, 3-phenylpropionaldehyde and 5-hydroxypentanal; and an aromatic aldehyde such as benzaldehyde, 1-naphthaldehyde, 2-methylbenzaldehyde, 3-methylbenzaldehyde, 4-methylbenzaldehyde, 2-hydroxybenzaldehyde, 3-hydroxybenzaldehyde, 4-hydroxybenzaldehyde, 4-tert-butylbenzaldehyde, 4-phenylbenzaldehyde, 2-methyoxybenzaldehyde, 3-methoxybenzaldehyde, 4-methoxybenzaldehyde, 2-chlorobenzaldehyde, 3-chlorobenzaldehyde, 4-chlorobenzaldehyde, 2-bromobenzaldehyde, 3-bromobenzaldehyde, 4-bromobenzaldehyde, 2-fluorobenzaldehyde, 3-fluorobenzaldehyde, 4-fluorobenzaldehyde, 2-methylthiobenzaldehyde, 3-methylthiobenzaldehyde, 4-methylthiobenzaldehyde, 2-carboxybenzaldehyde, 3-carboxybenzaldehyde, 4-carboxybenzaldehyde, 3-nitrobenzaldehyde, 4-aminobenzaldehyde, 4-acetylaminobenzaldehyde and 4-cyanobenzaldehyde. Among them, preferred is an aliphatic aldehyde, and more preferred is an aliphatic aldehyde having 1 to 12 carbon atoms, and especially preferred is an aliphatic aldehyde having 2 to 6 carbon atoms such as acetaldehyde, propionaldehyde, butyraldehyde and isobutyraldehyde.

As the compound (4), a commercially available one is usually used. An aqueous solution of the compound (4) such as formalin may be used.

The used amount of the compound (4) is usually 1 to 3 moles per 1 mole of the compound (3), and preferably 1.2 to 2.5 moles.

Examples of the acid catalyst include mineral acids such as hydrochloric acid, sulfuric acid, phosphoric acid and nitric acid; organic sulfonic acids such as p-toluenesulfonic acid; and organic carboxylic acids such as acetic acid, and mineral acids are preferable, and hydrochloric acid and sulfuric acid are more preferable.

The used amount of the acid catalyst is usually 0.001 to 3 moles per 1 mole of the compound (3).

The reaction of the compound (3) and the compound (4) is usually conducted in a solvent.

Examples of the solvent include water and a hydrophilic solvent. Examples of the hydrophilic solvent include a hydrophilic alcohol solvent such as methanol, ethanol and isopropanol; and a hydrophilic ether solvent such as tetrahydrofuran. Two or more kinds of the solvents may be mixed to be used. A hydrophilic alcohol solvent having 1 to 3 carbon atoms and a mixed solvent of water and a hydrophilic alcohol solvent having 1 to 3 carbon atoms are preferable, and the hydrophilic alcohol solvent having 1 to 3 carbon atoms is more preferable. In the present specification, "hydrophilic solvent" means a solvent capable of being miscible in any proportion with water.

The used amount of the solvent is usually 0.2 to 100 parts by weight per 1 part by weight of the compound (3), and preferably 0.5 to 10 parts by weight.

The reaction of the compound (3) and the compound (4) is usually carried out by mixing the compound (3), the compound (4), the acid catalyst and the solvent, and the mixing order thereof is not limited. The reaction may be conducted by adding the compound (4) to the mixture obtained by mixing the compound (3), the acid catalyst and the solvent, and the reaction may be conducted by adding the compound (3) to the mixture obtained by mixing the compound (4), the acid catalyst and the solvent. Alternatively, the reaction may be conducted by adding the acid catalyst to the mixture obtained by mixing the compound (3), the compound (4) and the solvent.

The reaction temperature is usually 0 to 100°C and preferably at 30 to 90°C. The reaction time is usually 10 minutes to 24 hours.

After completion of the reaction, the compound (1) can be isolated, for example, by concentrating the obtained reaction mixture containing the compound (1). Alternatively, the compound (1) can be also isolated by mixing a solvent in which the compound (1) is insoluble or is poorly soluble with the reaction mixture to cause precipitation of the solid of the compound (1) followed by filtration.

The compound (1) isolated may be dried at about 10 to about 100°C by ventilation or under reduced pressure. Alternatively, the compound (1) isolated may be dried after washing with a hydrophilic organic solvent. Examples of the hydrophilic organic solvent include a hydrophilic alcohol solvent such as methanol, ethanol, propanol and tert-butanol; a hydrophilic nitrile solvent such as acetonitrile; a hydrophilic ketone solvent such as acetone; a hydrophilic sulfoxide solvent such as dimethylsulfoxide; and a hydrophilic carboxylic acid solvent such as acetic acid.

The compound (1) obtained by drying may be used for the following step (A). Alternatively, the reaction mixture which contains the compound (1) and which has been obtained by the above-mentioned reaction of the compound (3) and the compound (4) may be used as it is for the step (A).

The step (A) is a step of polymerizing the compound (1), a compound having 1 to 30 carbon atoms and having at least one divalent group represented by the formula (2a) 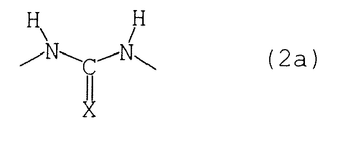 or at least two divalent groups represented by the formula (2b) 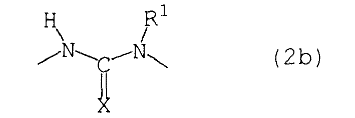 (hereinafter, simply referred to as the compound (2)), and an aldehyde compound to obtain a polymer.

In the formulae (2a) and (2b), X represents an oxygen atom or a sulfur atom, and an oxygen atom is preferable.

In the formula (2b), R¹ represents an alkyl group having 1 to 12 carbon atoms or an aryl group having 6 to 12 carbon atoms. Examples of the alkyl group having 1 to 12 carbon atoms include a methyl group, an ethyl group, a propyl group, an isopropyl group, a butyl group, a pentyl group and a hexyl group. Examples of the aryl group having 6 to 12 carbon atoms include a phenyl group.

As the compound (2), a compound having 1 to 12 carbon atoms is preferable.

As the compound (2), a compound having 1 to 30 carbon atoms and having one or two divalent groups represented by the formula (2a) is preferable, and a compound having 1 to 12 carbon atoms and having one or two divalent groups represented by the formula (2a) is more preferable.

Examples of the compound (2) include urea, N-methylurea, N,N'-dimethylurea, thiourea, 2-imidazolidinone, 4,5-dihydroxy-2-imidazolidinone and glycoluril, and urea, 2-imidazolidinone and glycoluril are preferable, and urea is more preferable.

As the compound (2), a commercially available one is usually used.

The used amount of the compound (2) is usually 0.05 to 2 moles per 1 mole of the compound (1), and preferably 0.1 to 0.5 mole.

Examples of the aldehyde compound include the same as the above-mentioned compound (3). Among them, preferred is formaldehyde, and it is usually in a form of an aqueous solution.

The used amount of the aldehyde compound is usually 0.1 to 6 moles per 1 mole of the compound (1) and preferably 1 to 5 moles.

The polymerization reaction is usually carried out in the presence of a basic catalyst.

Examples of the basic catalyst include an alkali metal hydroxide such as sodium hydroxide, potassium hydroxide and lithium hydroxide; an alkali metal carbonate such as sodium carbonate, potassium carbonate and lithium carbonate; an alkali metal hydrogen carbonate such as sodium hydrogen carbonate, potassium hydrogen carbonate and lithium hydrogen carbonate; and ammonia. Among them, preferred are the alkali metal carbonate and ammonia, and more preferred are sodium carbonate and ammonia, and especially preferred is ammonia. The basic catalyst is usually in a form of an aqueous solution.

The equivalent ratio of the compound (1) to the basic catalyst ([molar number of the compound (1)]/[(molar number of the basic catalyst)/(valence of the basic catalyst)] is usually 0.001 to 1000, preferably 0.005 to 10, and more preferably 0.01 to 5. When the reaction mixture which contains the compound (1) and which has been obtained by the above-mentioned reaction of the compound (3) and the compound (4) is used as it is, the basic catalyst is further used in an amount capable of neutralizing the acid catalyst existing in the reaction mixture.

The polymerization reaction of the compound (1), the compound (2) and the aldehyde compound is usually conducted in a solvent.

Examples of the solvent include water and a hydrophilic solvent, and examples of the hydrophilic solvent include the same as described above. The solvent may be used alone, and two or more kinds thereof may be mixed to be used. Water, a hydrophilic alcohol solvent having 1 to 3 carbon atoms, and a mixed solvent of water and a hydrophilic alcohol solvent having 1 to 3 carbon atoms are preferable. The used amount of the solvent is usually 0.2 to 1000 parts by weight per 1 part by weight of the compound (1), and preferably 1 to 100 parts by weight.

The reaction temperature of the polymerization reaction is usually 0 to 100°C and preferably 30 to 90°C.

The polymerization reaction of the compound (1), the compound (2) and the aldehyde compound is usually carried out by mixing the compound (1), the compound (2), the aldehyde compound, the basic catalyst and the solvent, and the mixing order is not limited. The reaction may be conducted by mixing the compound (1), the compound (2), the aldehyde compound, the basic catalyst and the solvent, and the reaction may be carried out by adding the aldehyde compound to a mixture of the compound (1), the compound (2), the basic catalyst and the solvent. Alternatively, the reaction may be conducted by adding the mixture of the compound (1) and the compound (2) to a mixture containing the aldehyde compound, the basic catalyst and the solvent. The reaction may be carried out by adding the basic catalyst to a mixture containing the compound (1), the compound (2), the aldehyde compound and the solvent. It is preferred that the reaction is conducted by adding the aldehyde compound to a mixture of the compound (1), the compound (2), the basic catalyst and the solvent.

The polymerization reaction may be conducted at a constant reaction temperature, and may be conducted with changing the reaction temperature.

The reaction may be carried out with stirring, and may be carried out without stirring.

The reaction time is usually 10 minutes to 10 days.

Alternatively, the compound (1), the compound (2) and the aldehyde compound may be polymerized in the presence of the basic catalyst followed by further conducting the polymerization reaction by adding an acid such as acetic acid and the aldehyde compound to the reaction mixture obtained.

After completion of the reaction, the polymer can be isolated by filtrating the reaction mixture obtained. The filtration may be conducted after washing the reaction mixture with a solvent. Examples of the solvent used for washing include an aqueous or alcohol solution of an acid such as hydrochloric acid, sulfuric acid and acetic acid and water. Examples of the alcohol include methanol, ethanol, propanol, isopropanol and tert-butanol.

The washing is usually conducted at a temperature below the boiling point of the solvent.

While the polymer obtained may be used as it is for the following step (B), the polymer is preferably dried at room temperature to about 100°C. The drying may be carried out by ventilation or under reduced pressure. As necessary, the polymer obtained may be ground.

When the polymerization reaction of the compound (1), the compound (2) and the aldehyde compound is conducted in water, the polymer is preferably dried after washing it with a hydrophilic organic solvent. When the above-mentioned washing is conducted using an aqueous solution of an acid, the polymer is preferably dried after washing it with a hydrophilic organic solvent.

Examples of the hydrophilic organic solvent include an alcohol solvent such as methanol, ethanol, propanol, isopropanol and tert-butanol; an aliphatic nitrile solvent such as acetonitrile; an aliphatic ketone solvent such as acetone; an aliphatic sulfoxide solvent such as dimethylsulfoxide; and an aliphatic carboxylic acid solvent such as acetic acid. The alcohol solvent, the aliphatic sulfoxide solvent and the aliphatic carboxylic acid solvent are preferable, and tert-butanol, dimethylsulfoxide and acetic acid are more preferable, and tert-butanol is especially preferable.

Alternatively, the polymer may be freeze-dried. The temperature of freeze-drying is usually -70 to 20°C and preferably -30 to 10°C. The freeze-drying is usually conducted under vacuum.

Alternatively, it may be dried under supercritical state using carbon dioxide or the like as described in JP 09-328308 A.

Next, the step (B) will be illustrated.

In the step (B), the polymer obtained in the above-mentioned step (A) is heated at 600°C to 3000°C under an inert gas atmosphere to obtain a carbon material. The polymer obtained in the step (A) is preferably heated at 800°C to 1000°C and is more preferably heated at 850 to 990°C.

By heating the polymer at 600°C to 3000°C, a packing density of the carbon material obtained tends to be improved, and a graphitization of the carbon material obtained tends to be inhibited.

The heating temperature during the heating of the polymer may be constant and may be changed.

The heating time is usually 1 minute to 24 hours.

Examples of the inert gas include a rare gas such as helium, neon and argon, and nitrogen.

The heating is preferably conducted in a calcining furnace such as a rotary kiln, a roller hearth kiln, a pusher kiln, a multiple-hearth furnace, a fluidized bed furnace and a high-temperature calcining furnace. The rotary kiln is more preferable in viewpoint that much amount of the polymer can easily be heated.

The heating is usually conducted by placing the polymer obtained in a calcining furnace, putting an inert gas into the calcining furnace and then heating at 600 to 3000°C for a given time. The heating may be conducted with flowing an inert gas through the calcining furnace.

Alternatively, a carbon material can also be produced by conducting the following steps (C) and (D) after the step (A):
step (C): a step of heating the polymer obtained in the step (A) at 400°C or less under an oxidizing gas atmosphere to obtain a calcined product, and
step (D): a step of heating the calcined product obtained in the above-mentioned step at 600°C to 3000°C under an inert gas atmosphere.

In the step (C), the polymer obtained in the step (A) is preferably heated at 150°C to 300°C. The heating time in the step (C) is usually 1 minute to 24 hours.

Examples of the oxidizing gas include air, water, carbon dioxide and oxygen. The oxidizing gas may be diluted with the above-mentioned inert gas.

The heating in the step (C) is also preferably conducted in a calcining furnace. Examples of the calcining furnace include the same as described above. The rotary kiln is preferable in viewpoint that much amount of the polymer can easily be heated.

The heating is usually conducted by placing the obtained polymer in a calcining furnace, putting an oxidizing gas into the calcining furnace, heating at 400°C or less for a given time. The heating may be conducted with flowing an inert gas through the calcining furnace.

The heating temperature during the heating of the polymer may be constant and may be changed.

When the heating is conducted at 150 to 190°C, the polymer is preferably heated under air atmosphere. When the heating is conducted at 190 to 400°C, the oxidizing gas is preferably diluted with the inert gas, and the content of the oxidizing gas in the diluted oxidizing gas is preferably 15% by volume or less.

In the step (D), the calcined product obtained in the step (C) is heated at 600°C to 3000°C under an inert gas atmosphere to obtain a carbon material.

The calcined product obtained in the step (C) is preferably heated at 800°C to 1000°C and more preferably heated at 850 to 990°C, and the heating time is usually 1 minute to 24 hours.

Examples of the inert gas include the same as described above.

The heating in the step (D) is also preferably conducted in a calcining furnace. Examples of the calcining furnace include the same as described above. The rotary kiln is preferable in viewpoint that much amount of the polymer can easily be heated.

The heating is usually conducted by placing the obtained calcined product in a calcining furnace, putting an inert gas into the calcining furnace and then heating at 600°C to 3000°C for a given time. The heating may be conducted with flowing an inert gas through the calcining furnace.

By heating the calcined product at 600°C to 3000°C, a packing density of the carbon material obtained tends to be improved, and a graphitization of the carbon material obtained tends to be inhibited.

The heating temperature during the heating of the calcined product may be constant and may be changed.

The carbon material obtained can be used for materials for electrodes in dry batteries, sensor for a piezoelectric devices, electric double-layer capacitors, lithium ion capacitors, lithium ion secondary cells, sodium ion secondary cells and fuel batteries; carriers for supporting catalysts; carriers for chromatography; adsorbents and the like. Especially, it is preferably used for materials for electrodes capable of discharging and charging lithium ions such as lithium ion secondary cells and lithium ion capacitors.

A ratio of number of hydrogen atoms to number of carbon atoms (H/C) of the carbon material obtained by the process of the present invention is usually 0.08 to 0.25, preferably 0.10 to 0.25 and more preferably 0.12 to 0.25.

The H/C ratio, a content of carbon and a content of nitrogen of the carbon material can be measured by elemental analysis of the carbon material. The content of carbon is usually 80 to 98% by weight. The content of nitrogen is usually 0.5 to 5% by weight and preferably 1 to 4% by weight.

A specific surface area of the carbon material obtained by the process of the present invention is usually 0 to 1000 m²/g_{.}

The carbon material obtained is usually ground to a powdery carbon materials having Median particle diameter based on volume (D₅₀) of 1 to 50 µm, preferably 1 to 10 µm, more preferably 4 to 7 µm and especially preferably 5 to 6 µm to be used. Examples of the suitable grinding methods include methods of grinding using a grinding machine for fine grinding such as an impact wear grinder such as jet mill, a centrifugal grinder, a ball mill (e.g. a tube mill, a compound mill, a conical ball mill, a rod mill and a planetary boll mill), a vibration mill, a colloid mill, a friction disk mill and a jet mill. Among them, preferred are the jet mill and the ball mill. When the ball mill is used, balls and grinding vessels made of non-metals such as alumina and agate is preferable in viewpoint of avoiding incorporation of metal powders in the carbon fine particles.

The electrode of the present invention comprises a carbon material obtained by the process of the present invention, and is suitably used for anodes of lithium ion secondary cell and anodes of lithium ion capacitors.

A binder is usually used so as to provide easy molding as an electrode.

The electrode is usually produced by a method comprising molding a mixture of the carbon material of the present invention, a binder and the like on a current collector.

The electrode can be also produced by coating slurry obtained by mixing the carbon material of the present invention, a binder, a solvent and the like, on a current collector by doctor blade method or by dipping the collector in the above-mentioned slurry followed by drying. Alternatively, the electrode can also be produced by preparing a sheet by kneading a mixture of the carbon material of the present invention, a binder, a solvent and the like followed by drying, and then, attaching the sheet on a current collector with interposing a conductive adhesive followed by subjecting to pressing, heating and drying. Alternatively, the electrode can also be produced by molding a mixture of the carbon material of the present invention, a binder, a liquid lubricant and the like on a current collector followed by removing the liquid lubricant to obtain a sheet and then streching the sheet in mono- or multi-axial directions.

When the electrode is formed in a sheet shape, the thickness thereof is usually about 5 µm to about 1000 µm.

Examples of materials for the current collector include metals such as nickel, aluminum, titanium, copper, gold, silver, platinum, aluminum alloy and stainless steel; carbon material or activated carbon fibers coated with nickel, aluminum, zinc, copper, tin, lead or an alloy thereof by plasma or ark spraying; and conductive films which is composed of resins such as rubbers and styrene-ethylene-butylene-styrene copolymer (SEBS) and a conducting agent and in which the conducting agent is dispersed.

Examples of configurations of the current collector include foil, plate, mesh, net, lath, punching, emboss and a combination thereof (for example, meshed plate).

Corrugated surface may be formed on a surface of the current collector by etching.

Examples of the binder include polymers of fluorine compounds. Examples of the fluorine compounds include a fluorinated C1-C18 alkyl acrylate; a fluorinated C1-C18 alkyl methacrylate; a perfluoroalkyl acrylate such as perfluorododecyl acrylate, perfluorooctyl acrylate and perfluorobutyl acrylate; a perfluoroalkyl methacrylate such as perfluorododecyl methacrylate, perfluorooctyl methacrylate and perfluorobutyl methacrylate; a perfluoroalkyl-substituted alkyl acrylate such as perfluorohexylethyl acrylate and perfluorooctylethyl acrylate; a perfluoroalkyl-substituted alkyl methacrylate such as perfluorohexylethyl methacrylate and perfluorooctylethyl methacrylate; a perfluoroalkyloxyalkyl acrylate such as perfluorododecyloxyethyl acrylate and perfluorodecyloxyethyl acrylate; a perfluoroalkyloxyalkyl methacrylate such as perfluorododecyloxyethyl methacrylate and perfluorodecyloxyethyl methacrylate; a fluorinated C1-C18 alkyl crotonate; a fluorinated C1-C18 alkyl maleate; a fluorinated C1-C18 alkyl fumarate; a fluorinated C1-C18 alkyl itaconate; a C2-C10 olefin having a fluorinated alkyl group having 1 to 17 fluorine atoms such as perfluorohexylethylene; a C2-C10 olefin having 1 to 20 fluorine atoms in which the fluorine atom is bonded to the double-bonded carbon atom such as tetrafluoroethylene, trifluoroethylene, vinylidene fluoride and hexafluoropropylene.

Examples of the binder also include polymers produced by addition polymerization of monomers having an ethylenic double bond but not having any fluorine atom. Examples of the monomers include C1-C22 alkyl acrylates such as methyl acrylate, ethyl acrylate, butyl acrylate, isobutyl acrylate, 2-ethylhexyl acrylate, isodecyl acrylate, lauryl acrylate and octadecyl acrylate; C1-C22 alkyl methacrylates such as methyl methacrylate, ethyl methacrylate, butyl methacrylate, isobutyl methacrylate, 2-ethylhexyl methacrylate, isodecyl methacrylate, lauryl methacrylate and octadecyl methacrylate; C3-C22 cycloalkyl acrylates such as cyclohexyl acrylate; C3-C22 cycloalkyl methacrylates such as cyclohexyl methacrylate; acrylates having an aromatic ring such as benzyl acrylate and phenylethyl acrylate; methacrylates having an aromatic ring such as benzyl methacrylate and phenylethyl methacrylate; C2-C4 alkyleneglycol or di(C2-C4 alkylene)glycol monoester of acrylic acid such as 2-hydroxyethyl acrylate, 2-hydroxypropyl acrylate and diethylene glycol monoester; C2-C4 alkyleneglycol or di(C2-C4 alkylene)glycol monoester of methacrylic acid such as 2-hydroxyethyl methacrylate, 2-hydroxypropyl methacrylate and diethylene glycol monoester; (poly)glycerin monoester of acrylic acid wherein the polymerization degree of (poly)glycerin is 1 to 4; (poly)glycerin monoester of methacrylic acid wherein the polymerization degree of (poly)glycerin is 1 to 4; (poly)ethyleneglycol diester of acrylic acid wherein the polymerization degree of (poly)ethyleneglycol is 1 to 100; (poly)ethyleneglycol diester of methacrylic acid wherein the polymerization degree of (poly)ethyleneglycol is 1 to 100; (poly)propyleneglycol diester of acrylic acid wherein the polymerization degree of (poly)propyleneglycol is 1 to 100; (poly)propyleneglycol diester of methacrylic acid wherein the polymerization degree of (poly)propyleneglycol is 1 to 100; 2,2-bist4-hydroxyethylphenyl)propyl diacrylate; 2,2-bis(4-hydroxyethylphenyl)propyl dimethacrylate; trimethylolpropane triacrylate; trimethylolpropane trimethacrylate; acrylamide-based monomers such as acrylamide, N-methylol acrylamide and diacetone acrylamide; methacrylamide-based monomers such as methacrylamide, N-methylol methacrylamide and diacetone acrylamide; monomers containing a cyano group such as acrylonitrile, 2-cyanoethyl acrylate, 2-cyanoethyl acrylamide, methacrylonitrile and 2-cyanoethyl methacrylate; styrene-based monomers such as styrene, α-methylstyrene, vinyltoluene, p-hydroxystyrene and divinylbenzene; diene monomers such as alkadiene having 4 to 12 carbon atoms such as butadiene, isoprene and chloroprene; alkenyl carboxylate monomers such as vinyl ester of C2-C12 carboxylic acid such as vinyl acetate, vinyl propionate, vinyl butyrate and vinyl octanoate, allyl ester of C2-C12 carboxylic acid such as allyl acetate, allyl propionate and allyl octanoate, and methallyl ester of C2-C12 carboxylic acid such as methallyl acetate, methallyl propionate and methallyl octanoate; monomers having an epoxy group such as glycidyl acrylate, allyl glycidyl ether, glycidyl methacrylate and methallyl glycidyl ether; C2-C12 monoolefins such as ethylene, propylene, 1-butene, 1-octene and 1-dodecene; monomers containing chlorine, bromine or iodine atoms such as vinyl chloride and vinylidene chloride; acrylic acid; methacrylic acid; and monomers having conjugated double bonds such as butadiene and isoprene.

Further, the polymers produced by addition polymerization may be copolymers composed of a plurality of monomers such as ethylene-vinyl acetate copolymer, styrene-butadiene copolymer and ethylene-propylene copolymer. Furthermore, polymers of vinyl carboxylate may be partially or completely saponified such as polyvinyl alcohol.

The binder may be copolymers composed of fluorine compounds and monomers having an ethylenic double bond but not having any fluorine atom.

Examples of the other binders include polysaccharides and its derivatives such as starch, methyl cellulose, carboxymethyl cellulose, hydroxymethyl cellulose, hydroxyethyl cellulose, hydroxypropyl cellulose, carboxymethyl hydroxyethyl cellulose and nitrocellulose; phenol resins; melamine resins; polyurethane resins; urea resins; polyimide resins; polyamide-imide resins; petroleum pitches and coal-tar pitches.

Among these binders, preferred is the polymer of a fluorine compound, and more preferred is a polymer of tetrafluoroethylene.

A plurality of binders may be used.

The amount of the binder blended in the electrode is usually about 0.5 to about 30 parts by weight per 100 parts by weight of the carbon material of the present invention, and preferably about 2 to about 30 parts by weight.

Examples of the solvent used for the binder include alcohol solvents such as isopropanol, ethanol and methanol; aprotic polar solvents such as N-methyl-2-pyrrolidone; ether solvents; and ketone solvents.

When the viscous binder is used, plasticizers may be used in order to easily coat slurry containing the carbon material of the present invention, a binder, a solvent and the like on a current collector.

A lithium ion secondary cell comprising the electrode of the present invention will be illustrated. The lithium ion secondary cell usually has a cathode, a separator, an electrolyte and an anode, and is a battery wherein reduction oxidation reactions are conducted on the both of the cathode and anode thereof and an electric energy can be discharged and charged.

The lithium ion secondary cell of the present invention has the carbon material of the present invention as the anode and lithium metal or a metal oxide containing lithium as the cathode.

The cathode usually comprises a current collector, a material capable of absorbing and discharging lithium ions, a conducting agent and a binder, and a mixture of the material capable of absorbing and discharging lithium ions, the conducting agent and the binder is supported on a current collector.

Examples of the material capable of absorbing and discharging lithium ions include lithium composite oxides containing lithium and at least one transition metal selected from the group consisting of V, Mn, Fe, Co and Ni, and a lithium foil. In the viewpoint of a high average discharge potential, laminar lithium composite oxides based on α-NaFeO₂ structure such as a composite oxide of lithium and cobalt and a composite oxide of nickel, a transition metal other than nickel or aluminum and lithium, and lithium composite oxides based on a spinel structure such as lithium manganese spinel are preferable.

Examples of the binder used for the cathode include the same as described above.

Examples of the conducting agent include the carbon material of the present invention, natural graphite, artificial graphite, coke and carbon black. These may be used alone or a mixture of two or more thereof such as a mixture of artificial graphite and carbon black may be used.

Examples of the electrolyte include non-aqueous electrolyte solutions obtained by dissolving a lithium salt in an organic solvent. Examples of the lithium salt include LiCl0₄, LiPF₆, LiAsF₆, LiSbF₆, LiBF₄, LiCF₃SO₃, LiN(CF₃SO₂)₂, LiC(CF₃SO₂)₃, Li₂B₁₀Cl₁₀, LiAlCl₄, lithium lower aliphatic carboxylates and a mixture thereof. Among them, preferred is at least one selected from the group consisting of LiPF₆, LiAsF₆, LiSbF₆, LiBF₄, LiCF₃SO₃, LiN(CF₃SO₂)₂ and LiC(CF₃SO₂)₃.

Examples of the organic solvent include carbonate solvents such as propylene carbonate, ethylene carbonate, dimethyl carbonate, diethyl carbonate, ethyl methyl carbonate, 4-trifluoromethyl-1,3-dioxolan-2-one and 1,2-di(methoxycarbonyloxy)ethane; ether solvents such as 1,2-dimethoxyethane, 1,3-dimethoxypropane, pentafluoropropyl methyl ether, 2,2,3,3-tetrafluoropropyl difluoromethyl ether, tetrahydrofuran and 2-methyltetrahydrofuran; ester solvents such as methyl formate, methyl acetate and Υ-butyrolactone; nitrile solvents such as acetonitrile and butyronitrile; amide solvents such as N,N-dimethylformamide and N,N-dimethylacetamide; carbamate solvents such as 3-methyl-2-oxazolidone; sulfur-containing solvents such as sulfolane, dimethylsulfoxide and 1,3-propane sultone; and the above-mentioned solvents having a fluorine-containing substituent. These may be used alone or two or more kinds of these solvents may be mixed to be used.

A separator is one separating a working electrode from a counter electrode and holding an electrolyte, and a membrane having large ion permeability, a predefined mechanical strength and electric insulating ability is usually used.

Examples of the separator include papers made of a viscose rayon, natural cellulose and the like; mixed papers made of fibers such as cellulose and polyester; electrolytic papers; kraft papers; manila papers; non-woven fabrics such as polyethylene non-woven fabrics, polypropylene non-woven fabrics, polyester non-woven fabrics, glass fibers, porous polyethylenes, aramid fibers, polybutyleneterephthalate non-woven fabrics and wholly aromatic p-polyamides; porous membranes such as vinylidene fluoride, tetrafluoroethylene, copolymers of vinylidene fluoride and hexafluoropropylene, fluororubber, porous polyethylenes, porous polypropylenes and porous polyesters.

The separator may be a molded article composed of particles of ceramics powder such as silica and the above-mentioned binders. The molded article is usually integrally molded with both of working electrode and counter electrode. A separator made of polyethylene or polypropylene may contain surfactants or silica particles in order to enhance hydrophilicity thereof. The separator may further contain organic solvents such as acetone, or plasticizers such as dibutyl phthalate (DBP).

As the separator, a proton conductive polymer can be used.

Among them, preferred are electrolytic papers, papers made of a viscose rayon or natural cellulose, kraft papers, manila papers, mixed papers made of cellulose or polyester fibers, polyethylene non-woven fabrics, polypropylene non-woven fabrics, polyester non-woven fabrics, sheets of Manila hemp and sheets of glass fibers.

The pore size of the separator is usually about 0.01 to about 10 µm. The thickness of the separator is usually about 1 to about 300 µm, and preferably about 5 to about 30 µm.

The separator may be a layered separator laminating a number of separators having different pore ratios in the separator. A separator comprising a polyolefin porous membrane and a polyester resin porous membrane is especially preferable.

The electrode of the present invention excels in a cycle property in case of repeatedly conducting discharge and charge thereof.

The electrode of the present invention can be used for an electrode of a lithium ion secondary cell. Exampled of the lithium ion secondary cell include a lithium ion capacitor wherein a cathode is active carbon, an anode is the electrode of the present invention and lithium is previously doped in the electrode.

Examples of the electrolyte of the lithium ion capacitor include the same as the solutions of the organic solvent of the lithium salts described above.

The lithium ion capacitor usually contains the above-mentioned separator.

### Examples

The present invention will be illustrated in more detail by Examples bellow, but the present invention is not limited to these Examples. In Examples, "part(s)" and "%" means a weight basis unless otherwise specifically noted. Alternatively, "1 part by volume" means a volume of 1 part of water at 4°C.

### Example 1

(1) Into a flask, 30 parts of resorcinol, 88 parts of methanol and 7 parts O concentrated sulfuric acid were added under nitrogen flow. After cooling the mixture obtained with ice, 21.1 parts of butyraldehyde was added dropwise thereto. The resultant mixture was stirred at 60°C for 2 hours, and then, cooled at room temperature to obtain a methanol solution containing a compound represented by the following formula (i) (hereinafter, simply referred to as the compound (i)). 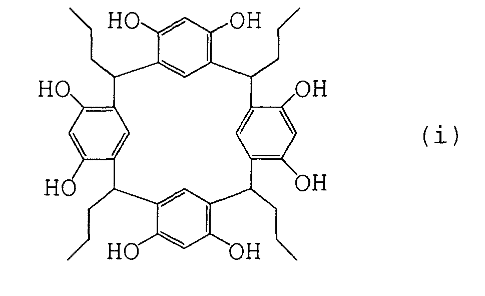
(2) To the obtained methanol solution containing the compound (i), 1.0 part of urea (molar ratio of urea relative to the compound (i) = 0.25) and 54.2 parts of 20% by weight aqueous sodium carbonate solution (molar ratio of sodium carbonate relative to the compound (i) = 1.5) were added. To the mixture obtained, 22.1 parts of 37% aqueous formaldehyde solution (molar ratio of formaldehyde relative to the compound (i) = 4) was added dropwise. The mixture obtained was maintained at 65°C for 2 hours. The reaction mixture obtained was cooled down to room temperature, and then, the solvent was removed therefrom with rotary evaporator at the condition of 30°C and 0.10 KPa. The block product obtained was ground using a planetary boll mill at 500 rpm for 10 minutes to obtain 99.2 parts of a powdery crude polymer.
   Ninety nine point two (99.2) parts of the powdery crude polymer obtained was mixed with 396.8 parts of water. The resultant mixture was maintained at 60°C for 1 hour, and then, filtrated to isolate a polymer. This operation was further repeated twice. The polymer obtained was dried at 60°C for 24 hours under reduced pressure to obtain 54.3 parts of a polymer.
(3) The polymer obtained was placed into a rotary kiln, and was heated from room temperature up to 900°C at the rate of about 5°C/minute with flowing nitrogen gas through the rotary kiln at the rate of 0.1 L/g, and kept at 900°C for 1 hour with flowing nitrogen gas through it to obtain a carbon material. The obtained carbon material was ground using a ball mill having a ball made of agate at 28 rpm for 5 minutes to obtain a powdery carbon material.
   BET surface area of the obtained powdery carbon material was 6 m²/g and total pore volume thereof was 0.01 cc/g.
   Hereinafter, As BET specific surface area, the value calculated from a nitrogen adsorption isothermal curve at liquid nitrogen temperature using AUTOSORB manufactured by YUASA IONICS INC was used. Total pore volume was calculated from an amount of nitrogen adsorption at a relative pressure of near 0.95 in the above-mentioned nitrogen adsorption isothermal curve. The volume of mesopore and the volume of micropore were calculated using BJH method from the above-mentioned nitrogen adsorption isothermal curve.
   The elemental analysis of the obtained powdery carbon material was conducted using CHN automated analytical apparatus (Type: vario EL) manufactured by Elementar Analysensysteme GmbH. The elemental analysis value of carbon was 83.2%, and the elemental analysis value of nitrogen was 0.6%. Based on the results of elemental analysis obtained, the ratio of number of hydrogen atoms to number of carbon atoms (H/C ratio) was calculated, and as the result, it was 0.11.
(4) Appropriate quantities of N-methyl-2-pyrrolidone was added to a mixture of 91 parts of the powdery carbon material obtained and 9 parts of polyvinylidene fluoride, and the resultant mixture was kneaded. The obtained mixture was applied on copper current collector having a thickness of 20 µm using doctor blade method. The applied current collector was dried at 50°C for 2 hours. The dried current collector was cut into a circle having φ 14.5 mm (area was about 1.7 cm²) and dried at 120°C for 8 hours in vacuo to prepare an electrode. The obtained electrode contained 2.9 mg of the mixture of the carbon material and polyvinylidene fluoride.

The coin typed cell (CR2032 type; outside diameter 20 mm (inside diameter 16 mm) X height 3.2 mm) containing the electrode obtained as an anode, a lithium foil (circular form having φ 14.5 mm, thickness about 300 µm) as a cathode, TF40-50 manufactured by NIPPON KODOSHI CORPORATION (non-woven fabrics cellulose having a circular form having φ 14.5 mm and thickness of about 50 µm) as a separator, and LiPF₆/propylene carbonate having a concentration of 1 mol/L as an electrolyte, respectively, was prepared. The initial charge and discharge capacity of the coin typed cell was measured, and as the result, it was 423 mAh/g.

Hereinafter, the initial charge and discharge capacity of the cell prepared was measured with a charge and discharge evaluation apparatus TOSCAT-3100 manufactured by TOYO SYSTEM CO., LTD. The measurement method is as followed.

The cell was subjected to charging with constant current of current density of 60 mA/g until the voltage reached 0 V and then, the cell was subjected to charging with constant potential of 0 V. The total time of charging with constant current of current density of 60 mA/g and charging with constant potential of 0 V was 12 hours. After completion of the charging with constant potential of 0 V, the cell was subjected to discharging with constant current of current density of 60 mA/g until the voltage reached 1.5 V. The initial charge and discharge capacity was calculated by cumulating quantity of electricity during discharging.

Further, the cell was subjected to charging with constant current of current density of 60 mA/g, and after reaching the voltage to 0 V, the cell was subjected to discharging with constant current of current density of 60 mA/g until the voltage reached 0.15 V. This charge and discharge cycle was repeated four times. The initial charge and discharge capacity at fourth cycle was calculated, and as the result, it was 174 mAh/g.

The result is shown in Table 1 and Table 2.

### Example 2

The polymer obtained in Example 1 (2) was placed into a rotary kiln, and the polymer was heated from room temperature up to 185°C at the rate of about 3°C/minute with flowing air through the rotary kiln at the rate of 0.05 L/g. After the temperature was reached to 185°C, the calcined product was immediately cooled down to room temperature.

Flowing air through the rotary kiln was stopped, and then, nitrogen gas was flown through the rotary kiln, and then, the calcined product was heated from room temperature up to 900°C at the rate of about 5°C/minute with flowing nitrogen gas through the rotary kiln at the rate of 0.1 L/g, and maintained at 900°C for 1 hour with flowing nitrogen through the rotary kiln to obtain a carbon material. The carbon material obtained was ground using a ball mill having a ball made of agate at 28 rpm for 5 minutes to obtain a powdery carbon material.

The cell was prepared according to the same manner as that described in Example 1 using the powdery carbon material obtained, and the evaluation was conducted. The result is shown in Table 1 and Table 2.

### Example 3

(1) A methanol solution containing the compound (i) was obtained according to the same manner as that in Example 1. To the solution obtained, 1.0 part of urea (molar ratio of urea relative to the compound (i) = 0.25) and 13.9 parts of ammonia water (molar ratio of ammonia relative to the compound (i) = 1) were added. To the mixture obtained, 37% aqueous formaldehyde solution (molar ratio of formaldehyde relative to the compound (i) = 4) was added dropwise. The mixture obtained was maintained at 70°C for 7 hours. The reaction mixture obtained was cooled down to room temperature, and then, filtrated to obtain 92.6 parts of crude polymer. The crude polymer was mixed with 370.4 parts of water. The resultant mixture was maintained at 60°C for 1 hour, and then, filtrated to obtain a polymer. This operation was further repeated twice. The polymer obtained was dried at 60°C for 24 hours to obtain 54.2 parts of a polymer.
(2) The polymer obtained was placed into a rotary kiln purged with nitrogen, and was heated from room temperature up to 185°C at the rate of about 3°C/minute with flowing air through the rotary kiln at the rate of 0.05 L/g. After the temperature was reached to 185°C, the calcined product was immediately cooled down to room temperature.

Flowing air through the rotary kiln was stopped, and then, nitrogen gas was flown through the rotary kiln, and then, the calcined product was heated from room temperature up to 900°C at the rate of about 5°C/minute with flowing nitrogen gas through the rotary kiln at the rate of 0.1 L/g, and maintained at 900°C for 1 hour with flowing nitrogen through the rotary kiln to obtain a carbon material. The carbon material obtained was ground using a ball mill having a ball made of agate at 28 rpm for 5 minutes to obtain a powdery carbon material.

The cell was prepared according to the same manner as that described in Example 1 using the powdery carbon material obtained, and the evaluation was conducted. The result is shown in Table 1 and Table 2.

### Example 4

(1) A methanol solution containing the compound (i) was obtained according to the same manner as that in Example 1. To the solution obtained, 2.4 parts of glycoluril (molar ratio of glycoluril relative to the compound (i) = 0.25) and 13.9 parts of 25% ammonia water (molar ratio of ammonia relative to the compound (i) = 1) were added dropwise. To the solution obtained, 22.1 parts of 37% aqueous formaldehyde solution (molar ratio of formaldehyde relative to the compound (i) = 4) was added dropwise. The mixture obtained was maintained at 70°C for 6 hours with stirring. The reaction mixture obtained was cooled down to room temperature, and then, filtrated to obtain 83.0 parts of a crude polymer. Eighty three point zero (83.0) parts of the crude polymer obtained was mixed with 332.0 parts of water. The resultant mixture was maintained at 60°C for 1 hour, and then, filtrated to obtain a polymer. This operation was further repeated twice. The polymer obtained was dried at 60°C for 24 hours to obtain 56.6 parts of a polymer.
(2) The polymer obtained was placed into a rotary kiln purged with nitrogen, and was heated from room temperature up to 185°C at the rate of about 3°C/minute with flowing air through the rotary kiln at the rate of 0.05 L/g. After the temperature was reached to 185°C, the calcined product was immediately cooled down to room temperature.

Flowing air through the rotary kiln was stopped, and then, nitrogen gas was flown through the rotary kiln, and then, the calcined product was heated from room temperature up to 900°C at the rate of about 5°C/minute with flowing nitrogen gas through the rotary kiln at the rate of 0.1 L/g, and maintained at 900°C for 1 hour with flowing nitrogen through the rotary kiln to obtain a carbon material. The carbon material obtained was ground using a ball mill having a ball made of agate at 28 rpm for 5 minutes to obtain a powdery carbon material.

The cell was prepared according to the same manner as that described in Example 1 using the powdery carbon material obtained, and the evaluation was conducted. The result is shown in Table 1 and Table 2.

### Example 5

(1) A methanol solution containing the compound (i) was obtained according to the same manner as that in Example 1. To the solution obtained, 2.9 parts of imidazolidinone (molar ratio of imidazolidinone relative to the compound (i) = 0.5) was added, and 13.9 parts of 25% ammonia water (molar ratio of ammonia relative to the compound (i) = 1) was further added dropwise thereto. To the solution obtained, 22.1 parts of 37% aqueous formaldehyde solution (molar ratio of formaldehyde relative to the compound (i) = 4) was added dropwise. The mixture obtained was maintained at 70°C for about 8 hours with stirring. The reaction mixture obtained was cooled down to room temperature, and then, 5.6 parts of 37% aqueous formaldehyde solution (molar ratio of formaldehyde relative to the compound (i) = 1.1) and 4.1 parts of acetic acid were added dropwise. The mixture obtained was maintained at 70°C for 6 hours with stirring. The reaction mixture obtained was cooled down to room temperature, and then, filtrated to obtain 104.2 parts of a crude polymer. One hundred four point two (104.2) parts of the crude polymer obtained was mixed with 420 parts of water. The resultant mixture was maintained at 60°C for 1 hour, and then, filtrated to obtain a polymer. This operation was further repeated twice. The polymer obtained was dried at 60°C for 24 hours to obtain 58.0 parts of a polymer.
(2) The polymer obtained was placed into a rotary kiln purged with nitrogen, and was heated from room temperature up to 185°C at the rate of about 3°C/minute with flowing air through the rotary kiln at the rate of 0.05 L/g. After the temperature was reached to 185°C, the calcined product was immediately cooled down to room temperature.

Flowing air through the rotary kiln was stopped, and then, nitrogen gas was flown through the rotary kiln, and then, the calcined product was heated from room temperature up to 900°C at the rate of about 5°C/minute with flowing nitrogen gas through the rotary kiln at the rate of 0.1 L/g, and maintained at 900°C for 1 hour with flowing nitrogen through the rotary kiln to obtain a carbon material. The carbon material obtained was ground using a ball mill having a ball made of agate at 28 rpm for 5 minutes to obtain a powdery carbon material.

The cell was prepared according to the same manner as that described in Example 1 using the powdery carbon material obtained, and the evaluation was conducted. The result is shown in Table 1 and Table 2.

**[Table 1]**

| | Pore Property | | | Elemental Analysis | | | |
|---|---|---|---|---|---|---|---|
| | BET Specific Surface Area (m²/g) | Volume of mesopore (cc/g) | Volume of micropore (cc/g) | C (%) | H (%) | N (%) | H/C |
| Ex. 1 | 6 | 0.00 | 0.00 | 83.2 | 0.8 | 0.6 | 0.11 |
| Ex. 2 | 9 | 0.01 | 0.00 | 83.4 | 0.7 | 0.9 | 0.10 |
| Ex. 3 | 218 | 0.02 | 0.07 | 83.9 | 1.7 | 1.5 | 0.24 |
| Ex. 4 | 0 | 0.01 | 0.00 | 84.1 | 1.6 | 1.7 | 0.23 |
| Ex. 5 | 455 | 0.01 | 0.01 | 88.9 | 1.1 | 2.0 | 0.15 |

**[Table 2]**

| | Initial charge and discharge capacity (mAh/g) | Charge and discharge capacity at fourth cycle (mAh/g) |
|---|---|---|
| Ex. 1 | 423 | 174 |
| Ex. 2 | 413 | 167 |
| Ex. 3 | 458 | 129 |
| Ex. 4 | 458 | 123 |
| Ex. 5 | 464 | 128 |

### Industrial Applicability

According to the present invention, a process for producing a carbon material which is useful for materials for electrodes such as lithium ion secondary cells of which initial charge and discharge capacity is improved can be provided.

## Claims

1. A process for producing a carbon material comprising
(A) a step of polymerizing a compound represented by the formula (1) 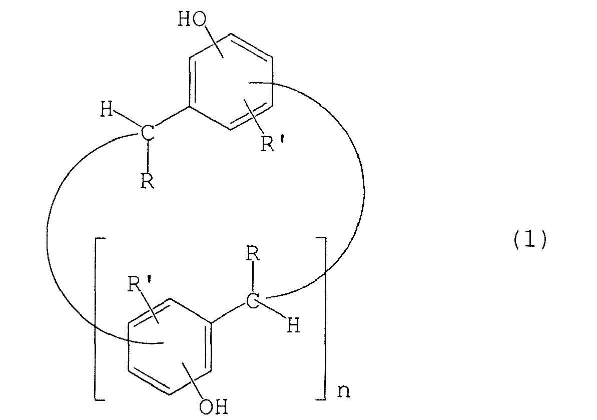 wherein R is independently in each occurrence a hydrogen atom or a hydrocarbon group having 1 to 12 carbon atoms, and the hydrocarbon group may have one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group, R' is independently in each occurrence a hydrogen atom or a methyl group, and n represents an integer of 3 to 7, a compound having 1 to 30 carbon atoms and having at least one divalent group represented by the formula (2a) 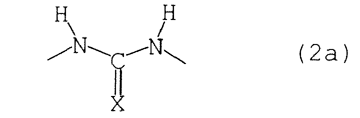 wherein X represents an oxygen atom or a sulfur atom, or at least two divalent groups represented by the formula (2b) 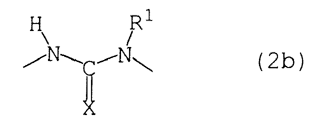 wherein R¹ represents an alkyl group having 1 to 12 carbon atoms or an aryl group having 6 to 12 carbon atoms, and X represents an oxygen atom or a sulfur atom, and
an aldehyde compound to obtain a polymer, and
(B) a step of heating the polymer obtained in the above-mentioned step (A) at 600°C to 3000°C under an inert gas atmosphere.

2. A process for producing a carbon material comprising
(A) a step of reacting a compound represented by the formula (1) 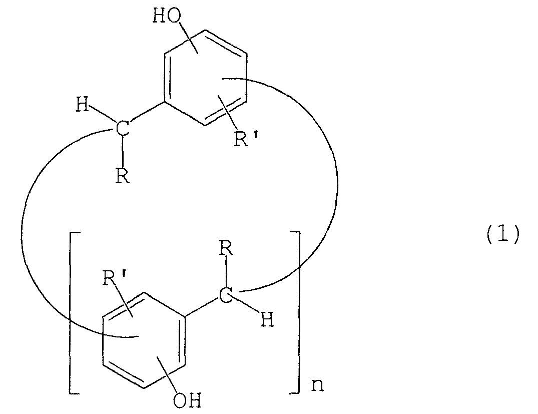 wherein R is independently in each occurrence a hydrogen atom or a hydrocarbon group having 1 to 12 carbon atoms, and the hydrocarbon group may have one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group, R' is independently in each occurrence a hydrogen atom or a methyl group, and n represents an integer of 3 to 7, a compound having 1 to 30 carbon atoms and having at least one divalent group represented by the formula (2a) 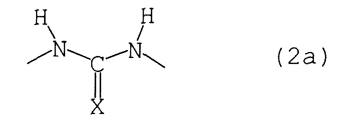 wherein X represents an oxygen atom or a sulfur atom, or at least two divalent groups represented by the formula (2b) 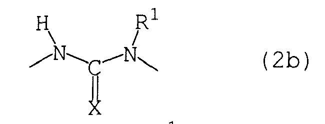 wherein R¹ represents an alkyl group having 1 to 12 carbon atoms or an aryl group having 6 to 12 carbon atoms, and X represents an oxygen atom or a sulfur atom,
and an aldehyde compound to obtain a polymer,
(C) a step of heating the polymer obtained in the above-mentioned step (A) at 400°C or less under an oxidizing gas atmosphere to obtain a calcined product, and
(D) a step of heating the calcined product obtained in the above-mentioned step at 600°C to 3000°C under an inert gas atmosphere.

3. The process according to claim 1 or 2, wherein the polymerization reaction is conducted in the presence of a basic catalyst in the step (A).

4. The process according to claim 1 or 2, wherein the step (A) further comprises a step of drying the polymer obtained.

5. The process according to claim 1 or 2, wherein the step (A) further comprises a step of washing the polymer obtained.

6. The process according to claim 1 or 2, wherein the step (A) further comprises a step of washing the polymer obtained followed by drying.

7. The process according to claim 1 or 2, wherein R' is a hydrogen atom in the formula (1).

8. The process according to claim 1 or 2, wherein R is a linear alkyl group having 1 to 12 carbon atoms in the formula (1).

9. The process according to claim 1 or 2, wherein the aldehyde compound is formaldehyde.

10. An electrode comprising a carbon material obtained by the process according to any one of claims 1 to 9.

11. A lithium ion secondary cell comprising the electrode according to claim 10.

12. A lithium ion capacitor comprising the electrode according to claim 10.

13. A carbon material obtainable by heating a polymer obtainable by reacting a compound represented by the formula (1) 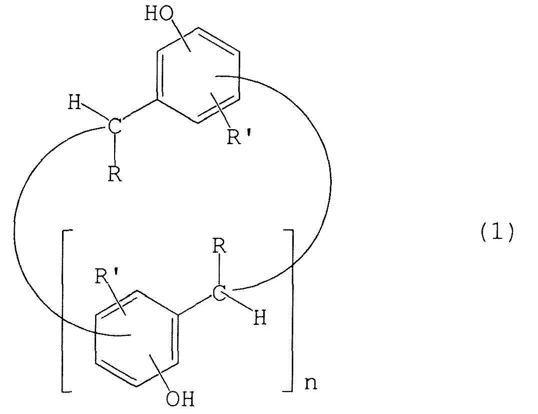 wherein R is independently in each occurrence a hydrogen atom or a hydrocarbon group having 1 to 12 carbon atoms, and the hydrocarbon group may have one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group, R' is independently in each occurrence a hydrogen atom or a methyl group, and n represents an integer of 3 to 7, a compound having 1 to 30 carbon atoms and having at least one divalent group represented by the formula (2a) 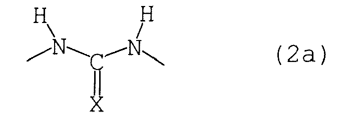 wherein X represents an oxygen atom or a sulfur atom, or at least two divalent groups represented by the formula (2b) 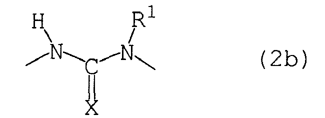 wherein R¹ represents an alkyl group having 1 to 12 carbon atoms or an aryl group having 6 to 12 carbon atoms, and X represents an oxygen atom or a sulfur atom,
and an aldehyde compound, at 600°C to 3000°C under an inert gas atmosphere.

14. A carbon material obtainable by heating a polymer obtaineable by reacting a compound represented by the formula (1) 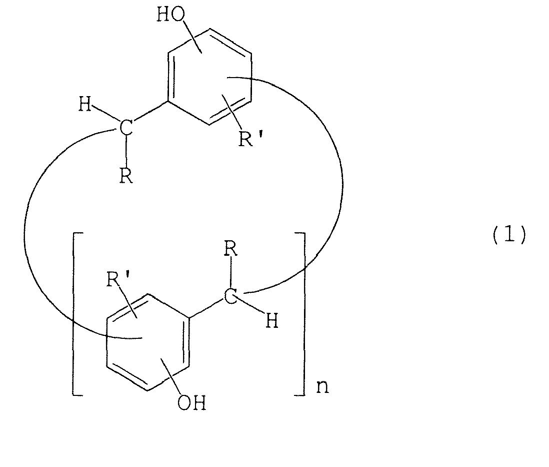 wherein R is independently in each occurrence a hydrogen atom or a hydrocarbon group having 1 to 12 carbon atoms, and the hydrocarbon group may have one or more substituents selected from the group consisting of a halogen atom, a hydroxyl group, an alkoxy group having 1 to 6 carbon atoms, an aryloxy group having 6 to 20 carbon atoms, a sulfo group (-SO₃H), an arylsulfonyl group having 6 to 20 carbon atoms, an alkylsulfonyl group having 1 to 6 carbon atoms, a nitro group, a thioalkyl group having 1 to 6 carbon atoms, a cyano group, a carboxyl group, an amino group, an acylamino group having 2 to 20 carbon atoms and a carbamoyl group, R' is independently in each occurrence a hydrogen atom or a methyl group, and n represents an integer of 3 to 7, a compound having 1 to 30 carbon atoms and having at least one divalent group represented by the formula (2a) 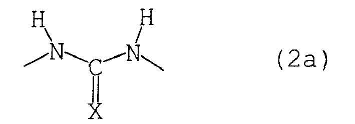 wherein X represents an oxygen atom or a sulfur atom, or at least two divalent groups represented by the formula (2b) 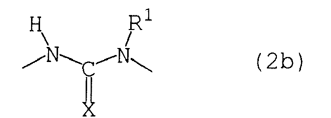 wherein R¹ represents an alkyl group having 1 to 12 carbon atoms or an aryl group having 6 to 12 carbon atoms, and X represents an oxygen atom or a sulfur atom,
and an aldehyde compound at 400°C or less under an oxidizing gas atmosphere followed by heating the calcined product obtained at 600°C to 3000°C under an inert gas atmosphere.

15. The carbon material according to claim 13 or 14, wherein a ratio of number of atoms of hydrogen atoms to number of atoms of carbon atoms (H/C) is 0.08 to 0.25.

16. The carbon material according to claim 13 or 14, wherein a content of nitrogen is 0.5% by weight or more.
